# EUROPÄISCHE PATENTSCHRIFT

(11) **EP 2 209 710 B1**
(45) Veröffentlichungstag und Bekanntmachung des Hinweises auf die Patenterteilung: **08.02.2012**
(21) Anmeldenummer: 08843828.8
(22) Anmeldetag: 30.10.2008
(51) Int. Cl.: B64C 1/00

(54) **QUERSTOSSLASCHE, SOWIE VERFAHREN, ZUM VERBINDEN VON ZWEI INSBESONDERE GEWICKELTEN CFK-RUMPFSEKTIONEN ZUR SCHAFFUNG EINER RUMPFZELLE**
TRANSVERSAL BUTT STRAP AND METHOD FOR CONNECTING TWO ESPECIALLY WOUND CFK FUSELAGE SECTIONS IN ORDER TO CREATE A FUSELAGE CELL
COUVRE-JOINT TRANSVERSAL ET PROCÉDÉ D'ASSEMBLAGE DE DEUX SECTIONS DE FUSELAGE, EN PARTICULIER ENROULÉES, EN PLASTIQUE RENFORCÉ DE FIBRES DE CARBONE POUR FORMER UNE CELLULE DE FUSELAGE

(30) Priorität: 31.10.2007 US 984042 P; 31.10.2007 DE 102007052098
(43) Veröffentlichungstag der Anmeldung: 28.07.2010
(73) Patentinhaber: Airbus Operations GmbH, 21129 Hamburg (DE)
(72) Erfinder: STEPHAN, Andreas, 21717 Fredenbeck (DE)
(74) Vertreter: Schatt, Markus F.
(86) Internationale Anmeldenummer: PCT/EP2008/009176
(87) Internationale Veröffentlichungsnummer: WO 2009/056319

(56) Entgegenhaltungen:
- WO-A-94/01277
- FR-A- 808 710
- FR-A- 1 462 186
- US-A- 6 042 055
- US-A1- 2005 213 278
- US-A1- 2006 060 705

## Beschreibung

Die Erfindung betrifft eine Querstoßlasche zur Schaffung einer Rumpfzelle eines Flugzeugs durch Verbindung von mehreren, insbesondere im Wickelverfahren hergestellten CFK-Rumpfsektionen, unter Bildung jeweils einer Quernaht.

Die Dokumente US 2006/060705 A1, US 2005/213278 A1, US 6 042 055 A und FR 808 710 A offenbaren eine Verbindung von Rumpfsektionen mittels einer Stoßlasche.

Darüber hinaus betrifft die Erfindung ein Verfahren zum Verbinden von Rumpfsektionen, insbesondere von im Wickelverfahren hergestellten CFK-Rumpfsektionen, zur Schaffung einer Rumpfzelle für ein Flugzeug mit einer derartigen Querstoßlasche.

Im modernen Flugzeugbau werden mehrere Rumpfsektionen mittels Querstoßlaschen unter Bildung von umlaufenden Quernähten zu vollständigen Flugzeugrümpfen zusammengefügt. Die Querstoßlaschen werden bevorzugt durch Nieten mit den jeweils aneinander zu fügenden Enden der Rumpfsektionen vernietet. Beidseitig der Quernaht werden in Abhängigkeit vom lokalen Belastungsprofil zwei bis drei Nietreihen umlaufend durch die Querstoßlasche und die Rumpfsektionshaut gesetzt. Im oberen Bereich der Rumpfsektion werden bevorzugt drei Nietreihen beidseitig der Quernaht gesetzt, da in dieser Zone im Wesentlichen Zugbelastungen in der Längsrichtung des Flugzeugrumpfes auftreten. Im unten liegenden Bereich der Quernaht, in dem die entscheidenden strukturellen Belastungen durch Druckkräfte entstehen, werden im Allgemeinen zwei Nietreihen auf beiden Seiten der umlaufenden Quernaht angebracht.

Das für die Herstellung der Querstoßlasche eingesetzte Material korrespondiert in aller Regel mit dem für die Rumpfsektion bzw. die Rumpfzellenhaut verwendeten Material. Durch die Querstoßlaschen werden Zug-/Druck-, Scher- sowie Umfangskräfte von einer Rumpfsektion auf die jeweils benachbarte Rumpfsektion übertragen.

Um Gewicht zu sparen, werden Rumpfsektionen zunehmend im Wickelverfahren mit Verbundmaterialien, wie zum Beispiel kohlefaserverstärktem Epoxidharz hergestellt (CFK-Rumpfsektionen). Aufgrund der in der Regel großen Querschnittsabmessungen von gewickelten CFK-Rumpfsektionen ergeben sich fertigungsbedingt unvermeidbare, insbesondere radiale, Maßabweichungen zwischen den zusammen zu fügenden Rumpfsektionen, die das spannungsfreie Zusammenfügen der Rumpfsektionen erschweren bzw. unmöglich machen. Die auftretenden Maßabweichungen können in der Regel nicht mit den herkömmlichen Querstoßlaschen kompensiert werden.

Um der Toleranzproblematik dennoch zu begegnen, werden gewickelte CFK-Rumpfsektionen nicht direkt mit einer weiteren gewickelten CFK-Rumpfsektion verbunden. Vielmehr folgt auf jede gewickelte CFK-Rumpfsektion in der Regel eine aus mindestens zwei Schalen zusammengesetzte CFK-Rumpfsektion, um die radialen Toleranzen besser ausgleichen zu können, wodurch sich allerdings der Herstellungsaufwand erhöht. Eine weitere Möglichkeit zum Ausgleich der Toleranzen besteht im Einsatz von Ausgleichsmitteln in fester oder flüssiger Form, die allerdings aus fertigungstechnischer Sicht gleichfalls ungünstig, weil zeitaufwändig sind.

Aufgabe der Erfindung ist es daher, eine Querstoßlasche bereitzustellen, die eine hinreichend hohe Flexibilität aufweist, um das unmittelbare Aneinanderfügen von zwei gewickelten CFK-Bauteil-Rumpfsektionen ohne zusätzliche Toleranzausgleichsmaßnahmen zu ermöglichen.

Diese Aufgabe wird durch eine Querstoßlasche mit den Merkmalen des Patentanspruchs 1 gelöst.

Dadurch, dass die Querstoßlasche mindestens zwei radial übereinander liegende Laschensegmente aufweist und in jedem der Laschensegmente eine Vielzahl von Längsschlitzen zum radialen Toleranzausgleich zwischen den Rumpfsektionen, eingebracht ist und die Längsschlitze in den Laschensegmenten jeweils tangential zueinander versetzt angeordnet sind, ergibt sich eine hohe Flexibilität der mehrlagigen Querstoßlasche insbesondere in radialer Richtung zur Längsachse der Rumpfsektion, so dass das direkte Zusammenfügen von zwei gewickelten CFK-Rumpfsektionen ohne weitere Toleranzausgleichsmaßnahmen möglich wird. Insbesondere können die Längsschlitze von zumindest jeweils zwei benachbarten Laschensegmenten in Umfangsrichtung gesehen zueinander versetzt oder beabstandet sein, so dass diese nicht übereinander liegen.

Die Längsschlitze in den Laschensegmenten sind jeweils zueinander versetzt angeordnet, so dass kein durchgehender Weg durch die Längsschlitze entsteht, wodurch unter anderem die Druckdichtigkeit sowie die Festigkeit der Querstoßlaschenverbindung verbessert wird. Durch die Anzahl und Anordnung der Längsschlitze in den jeweiligen Laschensegmenten kann die Flexibilität der Querstoßlasche beeinflusst werden. Je kleiner der Abstand zwischen den Längsschlitzen gewählt wird, desto höher wird die Flexibilität der Querstoßlasche, umso größere Toleranzabweichungen zwischen den Rumpfsektionen lassen sich kompensieren und umso geringer sind die auftretenden Bauteileigenspannungen bei der Montage.

Zur Verbindung von zwei Rumpfsektionen kommen bevorzugt mindestens drei oder vier erfindungsgemäß ausgestaltete Querstoßlaschen zum Einsatz, die aneinander anschließend und innenseitig mit beiden Rumpfsektionen verbunden im Wesentlichen die gesamte Umfangslänge der Querschnittsgeometrie der Rumpfsektionen im Quernahtbereich bedecken.

Eine Fortbildung der Querstoßlasche sieht vor, dass eine Materialstärke der mindestens zwei übereinander liegenden Laschensegmente zusammen betrachtet größer als eine Dicke einer Haut der Rumpfsektion ist. Hierdurch treten etwaige Schäden im Bereich der Quernaht, wie beispielsweise Rissbildungen in der Folge von Ermüdungserscheinungen, eher innerhalb der besser zu inspizierenden Haut der Rumpfsektionen auf.

Nach Maßgabe einer weiteren vorteilhaften Ausgestaltung sind die Längsschlitze gleichmäßig zueinander beabstandet in den Laschensegmenten angeordnet. Diese Ausgestaltung ermöglicht einen gleichmäßigen Toleranzausgleich in radialer Richtung über den gesamten Umfang der Rumpfsektion hinweg.

Eine weitere Fortbildung der Querstoßlasche sieht vor, dass für die Haut der zusammen zu fügenden Rumpfsektionen und die Querstoßlasche dasselbe Material, insbesondere ein Aluminiumlegierungsmaterial oder ein CFK-Verbundmaterial, verwendet wird. Hierdurch werden Korrosionsprobleme zwischen den Querstoßlaschen und den gewickelten CFK-Rumpfsektionen vermieden.

Nach Maßgabe einer weiteren Ausgestaltung weisen die Längsschlitze in den Laschensegmenten Ausnehmungen, insbesondere kreisförmige Ausnehmungen, auf. Die kreisförmigen Ausschnitte verhindern unter anderem die Entstehung von Rissen beim Aufspreizen der Querstoßlasche in radialer Richtung. Gleichzeitig erhöht sich die Beweglichkeit der Querstoßlasche in radialer Richtung.

Eine weitere Ausgestaltung der Querstoßlasche sieht vor, dass diese mit mindestens drei übereinander liegenden Laschensegmenten gebildet ist. Hierdurch wird eine höhere Flexibilität der Querstoßlasche in radialer Richtung erzielt, so dass größere Toleranzabweichungen zwischen den gewickelten CFK-Rumpfsektionen kompensiert werden können.

Darüber hinaus wird die erfindungsgemäße Aufgabe durch ein Verfahren nach Maßgabe des Patentanspruchs 8 mit den folgenden Schritten gelöst:
a) Verbinden, insbesondere Vernieten, der mindestens einen Querstoßlasche mit einem Ende einer Rumpfsektion,
b) Aufschieben eines Endes einer anzufügenden Rumpfsektion auf die mindestens eine Querstoßlasche, um den Toleranzausgleich zwischen den Rumpfsektionen in radialer Richtung zu bewirken,
c) Verbinden, insbesondere Vernieten, der mindestens einen Querstoßlasche mit der angefügten Rumpfsektion.

Hierdurch können insbesondere gewickelte CFK-Rumpfsektionen mit fertigungstechnisch unvermeidbaren Toleranzabweichungen hinsichtlich ihrer Querschnittsabmessungen weitgehend spannungsfrei zusammen gefügt werden. Der Toleranzausgleich erfolgt hierbei durch Spreizen bzw. Stauchen der Längsschlitze, wobei zugleich die Laschensegmente zur Unterstützung des Vorgangs in horizontaler Richtung, das heißt parallel zu einer Rumpfsektionslängsachse übereinander gleiten können.

Zunächst wird die mindestens eine flexible Querstoßlasche mit dem Ende einer Rumpfsektion verbunden, insbesondere mit dieser vernietet. Anschließend wird die anzufügende Rumpfsektion auf die Querstoßlasche aufgeschoben und mit dieser verbunden, insbesondere vernietet. Bei diesem Vorgang passen sich übereinander liegende Laschensegmente der Querstoßlasche dem erforderlichen Durchmesser an, was durch Spreizen bzw. Stauchen der Längsschlitze erfolgt. Nach der entsprechenden Anpassung der Querstoßlasche in radialer Richtung kann die Querstoßlasche mit dem Ende der anzufügenden Rumpfsektion vernietet werden. Infolge der Vernietung entsteht ein kompakter und im Wesentlichen starrer Verbund zwischen den beiden Rumpfsektionen, der - wie bei konventionellen Querstoßlaschen auch - sämtliche Kräfte überträgt.

Alternativ kann die Verbindung der Rumpfsektionen auch durch Schrauben oder Kleben erfolgen.

Weitere vorteilhafte Ausgestaltungen des Verfahrens sind in den weiteren Patentansprüchen dargelegt.

In der Zeichnung zeigt:
- Fig. 1: einen schematischen Querschnitt durch eine erfindungsgemäß mehrlagig ausgebildete flexible Querstoßlasche;
- Fig. 2: eine Ansicht einer an der Rumpfsektion befestigten Querstoßlasche;
- Fig. 3: das Funktionsprinzip der flexiblen Querstoßlasche zum radialen Toleranzausgleich zwischen Rumpfsektionen;
- Fig. 4: eine vereinfachte perspektivische Außenansicht (Ausschnitt) eines Endes einer Rumpfsektion mit einer Querstoßlasche; und
- Fig. 5: eine vereinfachte perspektivische Innenansicht (Ausschnitt) eines Endes einer Rumpfsektion mit Querstoßlasche.

In der Zeichnung weisen die gleichen konstruktiven Elemente jeweils dieselben Bezugsziffern auf.

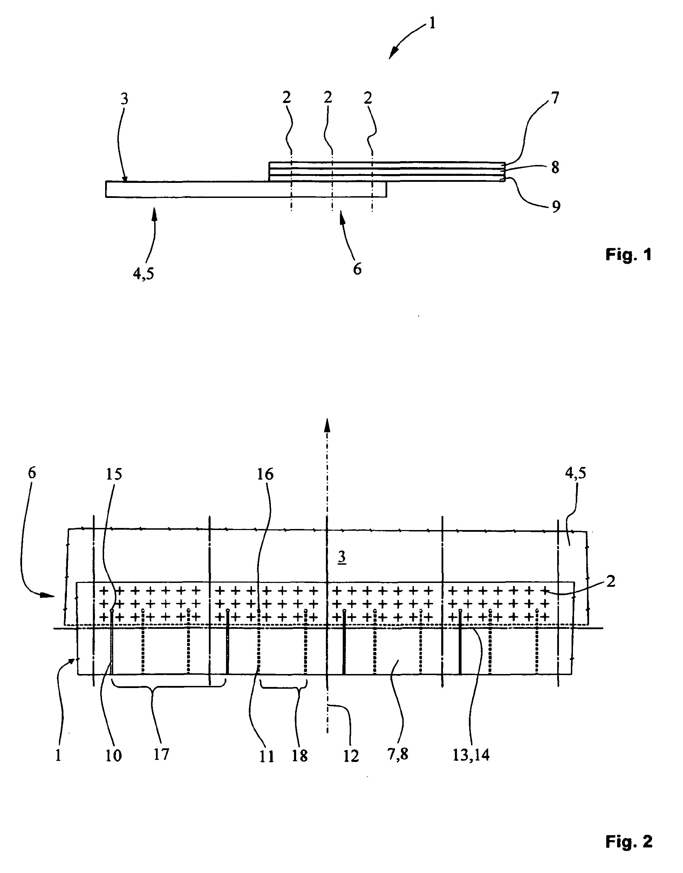

Die Fig. 1 zeigt eine schematische Querschnittsdarstellung durch eine erfindungsgemäß ausgebildete Querstoßlasche. Die Querstoßlasche 1 ist mittels einer Vielzahl von Nietelementen 2 mit einer Innenseite 3 einer Haut 4 einer Rumpfsektion 5 im Bereich eines Endes 6 der Rumpfsektion 5 verbunden. Im gezeigten Ausführungsbeispiel ist die Querstoßlasche 1 mit drei übereinander liegenden Laschensegmenten 7 bis 9 gebildet. Die Nietverbindungen 2 sind bevorzugt in mindestens drei gleichmäßig beabstandet zueinander über den gesamten Umfang der tonnenförmigen Rumpfsektion 5 verlaufenden Reihen angeordnet. Anstatt der gezeigten Nietverbindungen 2 kann die Querstoßlasche 1 mit beliebigen Verbindungstechniken, wie zum Beispiel Verschrauben, Kleben, Schweißen oder eine beliebigen Kombination hiervon innenseitig mit der Haut 4 verbunden werden.

Die Fig. 2 zeigt eine Ansicht einer mit der Rumpfsektion verbundenen Querstoßlasche. Der besseren zeichnerischen Übersicht wegen sind in der Darstellung lediglich zwei übereinander liegende Laschensegmente dargestellt (vgl. Fig. 1).

Die Querstoßlasche 1 ist mit einer Vielzahl von Nietverbindungen 2, von denen der besseren Darstellbarkeit wegen lediglich eine mit einer Bezugsziffer versehen ist, mit der Haut 4 im Bereich des Rumpfsektionsendes 6 der Rumpfsektion 5 verbunden. Hierbei sind die Nietverbindungen 2 beispielsweise in drei nebeneinander, die tonnenförmige Rumpfsektion 5 umlaufenden Reihen, matrixförmig angeordnet. In dem Ausschnitt des Laschensegments 7 der Fig. 2 sind vier Längsschlitze, von denen der besseren Übersicht wegen lediglich ein Längsschlitz 10 mit einer Bezugsziffer versehen ist, eingebracht. Entsprechendes gilt für einen Längsschlitz 11 in dem darunter liegenden Laschensegment 8. Sämtliche Längsschlitze verlaufen im Wesentlichen parallel zu einer Längsachse 12 der Rumpfsektion 5 bzw. einer nicht dargestellten Rumpfzelle des Flugzeugs. Alle Längsschlitze erstrecken sich bevorzugt über eine Mittellinie 13 der Querstoßlasche 1 hinweg, wobei die Mittellinie 13 zugleich einer sich zwischen den zusammenzufügenden Rumpfsektionen bildenden Quernaht 14 entspricht. Die Längsschlitze in jedem Laschensegment können in Abhängigkeit von den lokalen Flexibilitäts-Erfordernissen gleichmäßig oder unterschiedlich zueinander eingebracht sein. An ihren Enden weisen die Längsschlitze 10,11 bevorzugt jeweils eine Ausnehmung oder Verbreiterung und insbesondere kreisförmige Ausnehmung auf, von denen lediglich die Ausnehmungen 15,16 repräsentativ für alle übrigen mit einer Bezugsziffer versehen sind. Die Längsschlitze 10, 11 sind mit einem Versatz zueinander in die Laschensegmente 7, 8 eingebracht, wodurch ein durchgehender Pfad zwischen den Laschensegmenten 7, 8 vermieden wird, der zu Dichtigkeits- und Festigkeitsproblemen führen würde. Durch die bevorzugt kreisförmig ausgebildeten Ausnehmungen im Bereich der Enden der Längsschlitze werden lokale Spannungsspitzen abgeschwächt und die Flexibilität, das heißt die Fähigkeit der Längsschlitze, ihre Breite durch Stauchen oder Spreizen entsprechend des erforderlichen Toleranzausgleichs in radialer Richtung zu variieren, insgesamt verbessert. Zwischen den Längsschlitzen entstehen jeweils in etwa rechteckförmige Teillaschen 17, 18.

Ausgehend vom innersten Laschensegment 7 bis zum äußersten Laschensegment 9 kann die Anzahl der Längsschlitze 10, 11 von Laschensegment zu Laschensegment gegebenenfalls sukzessive reduziert werden, beispielsweise jeweils halbiert oder um einen konstanten Betrag zwischen "1" und "8" verringert werden (vgl. insbesondere die Figur 2).

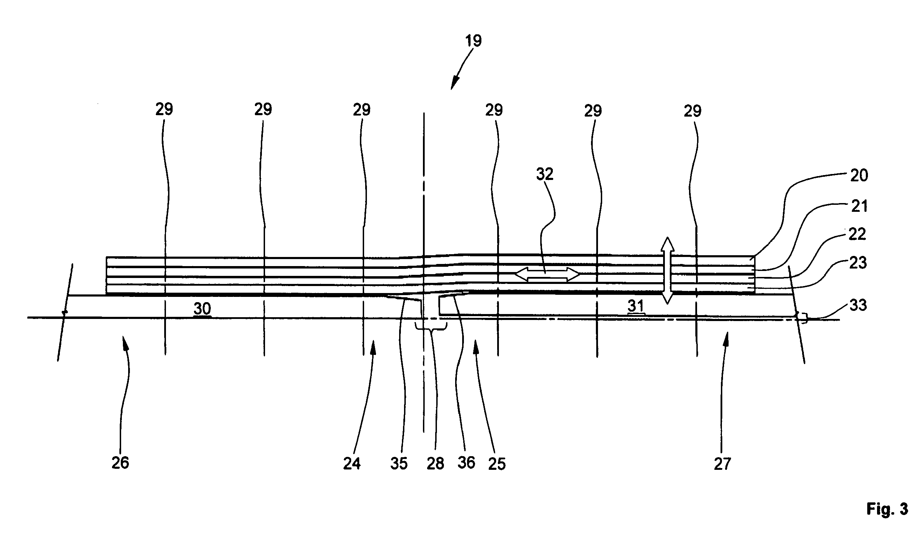

Die Figur 3 illustriert schematisch das Funktionsprinzip der flexiblen Querstoßlasche zum radialen Toleranzausgleich zwischen zu fügenden gewickelten CFK-Rumpfsektionen.

Eine Querstoßlasche 19 ist in diesem Ausführungsbeispiel mit vier übereinander liegenden Laschensegmenten 20 bis 23 gebildet und verbindet zwei Enden 24, 25 einer linken und einer rechten gewickelten Rumpfsektion und insbesondere CFK-Rumpfsektion 26, 27 unter Bildung einer Quernaht 28 miteinander. Die Verbindung der beiden Rumpfsektionen 26, 27 erfolgt im gezeigten Ausführungsbeispiel durch eine Vielzahl von matrixförmig in insgesamt sechs senkrecht zur Zeichenebene verlaufenden Reihen angeordnete Nietelemente 29, die sowohl die Querstoßlasche 19 als auch jeweils beide Häute 30, 31 der beiden Rumpfsektionen 26, 27 durchsetzen. Vor dem Setzen der Nietelemente 29 im Bereich der linken Rumpfsektion 26 können die Laschensegmente 20 bis 23 im Bereich der rechten Rumpfsektion 27 in Richtung des horizontal verlaufenden Doppelpfeils 32 aufeinander gleiten, wodurch ein radialer Versatz 33 zwischen den Enden 24, 25 der Rumpfsektionen 26, 27 kompensiert wird. Die mehrlagig flexibel ausgestaltete Querstoßlasche 19 ermöglicht somit eine direkte Verbindung von zwei gewickelten CFK-Rumpfsektionen 26, 27, die unvermeidbare, fertigungsimmanente Maßabweichungen hinsichtlich ihrer Querschnittsabmessungen aufweisen.

Hierbei kann sich der zunächst noch nicht vernietete Teil der Querstoßlasche 19 zur Anbindung der rechten Rumpfsektion 27 in Richtung des vertikalen Doppelpfeils 34 in Abhängigkeit von den radialen Ausgleichserfordernissen auf und ab bewegen. Zur Erleichterung des Toleranzausgleichs und der Beweglichkeit der Querstoßlasche 19 weisen sowohl die linke als auch die rechte Rumpfsektion 26,27 im Bereich beider Enden 24,25 Anfasungen 35,36, das heißt innenseitig leicht angeschrägt nach unten verlaufende Kanten auf. Nach erfolgtem Toleranzausgleich kann die rechte Rumpfsektion 27 ebenfalls mittels der Nietelemente 29 mit der Querstoßlasche 19 verbunden werden.

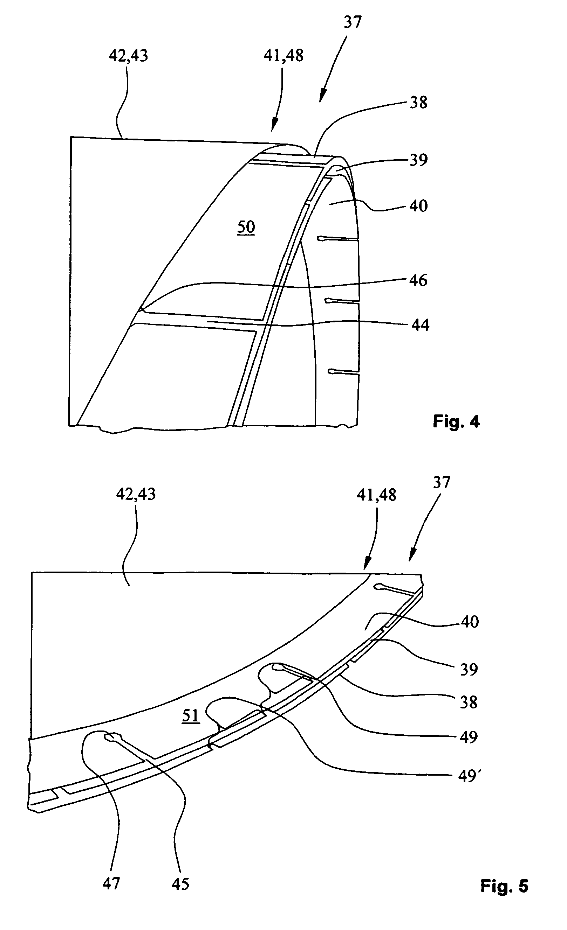

Im weiteren Verlauf der Beschreibung wird zugleich auf die Figuren 4 und 5 Bezug genommen. Die Fig. 4 zeigt eine perspektivische Außenansicht eines Endes einer Rumpfsektion mit einer erfindungsgemäß ausgebildeten Querstoßlasche, während die Fig. 5 eine Innenansicht der einseitig angebundenen Querstoßlasche abbildet. Die Querstoßlasche 37 umfasst in der Darstellung der Figuren 4, 5 drei übereinander liegende Laschensegmente 38 bis 40. Die Querstoßlasche 37 ist innenseitig mit dem Ende 41 einer Haut 42 einer Rumpfsektion 43 verbunden, insbesondere mit dieser vernietet, verschraubt, verklebt oder anderweitig verbunden. Die innenseitig am Ende der Rumpfsektion umlaufend befestigte Querstoßlasche 37 kann einstückig oder mit mehreren kreisbogenförmigen und bevorzugt aneinander anschließenden Abschnitten gebildet sein. Jedes der Laschensegmente 38 bis 40 weist eine Mehr- oder Vielzahl von Längsschlitzen auf, von denen der besseren Übersicht halber lediglich ein Längsschlitz 44 im Laschensegment 38 repräsentativ für die Übrigen und ein Längsschlitz 45 im Laschensegment 40 stellvertretend für alle Übrigen mit einer Bezugsziffer versehen ist. Die Längsschlitze können gleichmäßig zueinander beabstandet über den Umfang der jeweiligen Laschensegmente 38 bis 40 hinweg verteilt angeordnet sein. Alternativ ist gleichfalls eine ungleichmäßige Beabstandung in Abhängigkeit von den lokalen Flexibilitätsanforderungen an die Querstoßlasche 37 möglich.

Sämtliche oder zumindest einige Längsschlitze weisen auf ihrer der Haut 42 zugewandten Seite bzw. auf der von der Quernaht weggerichteten Seite der Querstoßlasche 37 kreisförmige Ausnehmungen auf, von denen lediglich die Ausnehmungen 46,47 in den Längsschlitzen 44,45 repräsentativ für die übrigen eine Bezugsziffer tragen. Im Bereich einer Quernaht 48 schließt eine weitere (nicht dargestellte) anzufügende Rumpfsektion 43 an. Die kreisförmige Ausnehmung 46 im Längsschlitz 44 ist teilweise von der Haut 42 (vergleiche Fig. 4) verdeckt. Wie insbesondere aus der Fig. 5 ersichtlich ist, sind die Längsschlitze innerhalb jedes Laschensegments 38 bis 40 jeweils in Bezug zu den Längsschlitzen im benachbarten Laschensegment 38 bis 40 um einen Längenbetrag 49, 49' zu einander verschoben angeordnet. Hierdurch wird ein durchgehender Pfad zwischen den Längsschlitzen vermieden und die Druckdichtigkeit der gesamten Anordnung verbessert. Zwischen den Längsschlitzen bilden sich z.B. im Wesentlichen rechteckförmige Teillaschen 50, 51, die bei in radialer Richtung flexiblen Ausgleichsbewegungen der Querstoßlasche 37 in axialer Richtung übereinander gleiten. Somit ermöglicht die mehrlagige, längsgeschlitzt ausgebildete Querstoßlasche 37 den Toleranzausgleich zwischen Rumpfsektionen mit abweichenden Querschnittsabmessungen. Die Teillaschen 50,51 sind jeweils leicht bogenförmig gekrümmt, das heißt jeweils der lokalen Krümmung der zusammen zu fügenden Rumpfsektionen folgend ausgebildet. Ein erfindungsgemäßes Verfahren unter Verwendung der eingangs beschriebenen flexiblen Querstoßlasche ist im Wesentlichen durch die Abfolge der folgenden Arbeitsschritte charakterisiert:
Zunächst wird in einem ersten Verfahrensschritt eine umlaufende Querstoßlasche innenseitig mit der Haut eines Endes einer im Wesentlichen tonnenförmigen Rumpfsektion verbunden, insbesondere mit dieser vernietet. Die umlaufende Kante der Haut bzw. der sich später bildende Quernahtbereich verläuft hierbei jeweils ungefähr mittig in Bezug auf die Querstoßlasche. Um den Toleranzausgleich zwischen dieser ersten Rumpfsektion mit einer weiteren anzufügenden Rumpfsektion zu erleichtern, können die Enden beider Rumpfsektionen innenseitig Anfasungen aufweisen (vgl. Fig. 3).

In einem zweiten Verfahrensschritt wird die anzufügende Rumpfsektion auf die Querstoßlasche aufgeschoben, wobei infolge der mit mehreren übereinander liegenden und jeweils längsgeschlitzten Laschensegmenten gebildeten Querstoßlasche ein Toleranzausgleich im Hinblick auf unterschiedliche Querschnittsabmessungen der Rumpfsektionen durch eine radiale Biegung der einzelnen Laschensegmente erfolgt. Vor dem zweiten Verfahrensschritt oder nach Abschluss des zweiten Verfahrensschrittes können gegebenenfalls zusätzliche Abdichtungsmaßnahmen, wie zum Beispiel das Einbringen von Dichtungsmasse in den sich bildenden Quernahtbereich erfolgen, um die geforderte Druckfestigkeit der auf diese Art und Weise gebildeten Rumpfzelle zu gewährleisten.

In einem dritten Verfahrensschritt erfolgt die Verbindung der angefügten Rumpfsektion mit der Querstoßlasche unter Bildung der endgültigen Quernaht zwischen beiden Rumpfsektionen, insbesondere durch Vernieten.

Gegebenenfalls, insbesondere im Fall von größeren Toleranzabweichungen zwischen den Querschnittsabmessungen der zusammen zufügenden Rumpfsektionen kann es im Einzelfall erforderlich sein, zusätzliche Mittel zum Toleranzausgleich, beispielsweise streifenförmige Zulagen oder aushärtbare Kunststoffmaterialien zur Spaltfüllung in den Bereich der Quernaht einzubringen.

Durch das Wiederholen der Verfahrensschritte 1 bis 3 können beliebig lange Rumpfzellen für Flugzeuge aus einer Vielzahl von gewickelten CFK-Rumpfsektionen hergestellt werden, wobei hinsichtlich der Fertigungsgenauigkeit im Hinblick auf die Querschnittsabmessungen der zu fügenden gewickelten CFK-Rumpfsektionen nur relativ geringe Anforderungen zu stellen sind.

### Bezugszeichenliste

- 1: Querstoßlasche
- 2: Nietelement (Verbindungselement)
- 3: Innenseite
- 4: Haut (Außenseite)
- 5: Rumpfsektion
- 6: Ende (Rumpfsektion)
- 7: Laschensegment
- 8: Laschensegment
- 9: Laschensegment
- 10: Längsschlitz
- 11: Längsschlitz
- 12: Längsachse
- 13: Mittellinie
- 14: Quernaht
- 15: Ausnehmung (kreisförmig)
- 16: Ausnehmung (kreisförmig)
- 17: Teillasche
- 18: Teillasche
- 19: Querstoßlasche
- 20: Laschensegment
- 21: Laschensegment
- 22: Laschensegment
- 23: Laschensegment
- 24: Ende (linke Rumpfsektion)
- 25: Ende (rechte Rumpfsektion)
- 26: Rumpfsektion (links)
- 27: Rumpfsektion (rechts)
- 28: Quernaht
- 29: Nietelement (Verbindungselement)
- 30: Haut (linke Rumpfsektion)
- 31: Haut (rechte Rumpfsektion)
- 32: Doppelpfeil
- 33: Versatz (radialer)
- 34: Doppelpfeil
- 35: Anfasung (Anschrägung)
- 36: Anfasung (Anschrägung)
- 37: Querstoßlasche
- 38: Laschensegment
- 39: Laschensegment
- 40: Laschensegment
- 41: Ende (Rumpfsektion)
- 42: Haut
- 43: Rumpfsektion
- 44: Längsschlitz
- 45: Längsschlitz
- 46: Ausnehmung (kreisförmig)
- 47: Ausnehmung (kreisförmig)
- 48: Quernaht
- 49: Längenbetrag
- 50: Teillasche
- 51: Teillasche

## Patentansprüche

1. Querstoßlasche (1, 19, 37) zur Schaffung einer Rumpfzelle eines Flugzeugs durch Verbindung von mehreren Rumpfsektionen (5, 26, 27, 43), die insbesondere im Wickelverfahren als CFK-Sektionen hergestellt sind, unter Bildung jeweils einer Quernaht (14,28,48), **dadurch gekennzeichnet, dass** die Querstoßlasche (1, 19, 37) mindestens zwei radial übereinander liegende Laschensegmente (7-9, 20-23, 38-40) aufweist und in jedem der Laschensegmente (7-9, 20-23, 38-40) eine Vielzahl von Längsschlitzen (10,11,44,45), insbesondere zum radialen Toleranzausgleich zwischen den Rumpfsektionen (5, 26, 27, 43), eingebracht ist und die Längsschlitze (10,11,44,45) in den Laschensegmenten (7-9,20-23,38-40) jeweils tangential zueinander versetzt angeordnet sind.

2. Querstoßlasche (1, 19, 37) nach Patentanspruch 1, **dadurch gekennzeichnet, dass** eine Materialstärke der mindestens zwei Laschensegmente (7-9, 20-23, 38-40) bevorzugt größer als eine Materialstärke jeder der Häute (4, 30, 31, 42) der Rumpfsektionen (5, 26, 27, 43) ist.

3. Querstoßlasche (1, 19, 37) nach Patentanspruch 1 oder 2, **dadurch gekennzeichnet, dass** die Längsschlitze (10, 11, 44, 45) bevorzugt gleichmäßig zueinander beabstandet unter Bildung einer Vielzahl von Teillaschen (17, 18, 50, 51) angeordnet sind.

4. Querstoßlasche (1, 19, 37) nach einem der Patentansprüche 1 bis 3, **dadurch gekennzeichnet, dass** die Laschensegmente (7-9, 20-23, 38-40) mit demselben Material wie die Häute (4, 30, 31, 42) der zusammen zu fügenden Rumpfsektionen (5, 26, 27, 43), insbesondere mit einem Verbundmaterial oder mit einem Aluminiumlegierungsmaterial, gebildet sind.

5. Querstoßlasche (1, 19, 37) nach einem der Patentansprüche 1 bis 4, **dadurch gekennzeichnet, dass** die Querstoßlasche (1, 19, 37) jeweils mit einer Vielzahl von Verbindungselementen, insbesondere mit Nietelementen (2, 29), mit Enden (6, 24, 25, 41) der zu fügenden Rumpfsektionen (5, 26, 27, 43) verbunden sind.

6. Querstoßlasche (1, 19, 37) nach einem der Patentansprüche 1 bis 5, **dadurch gekennzeichnet, dass** die Längsschlitze (10, 11, 44, 45) jeweils eine Ausnehmung (15, 16, 46, 47), insbesondere eine kreisförmige Ausnehmung, aufweisen.

7. Querstoßlasche (1, 19, 37) nach einem der Patentansprüche 1 bis 6, **dadurch gekennzeichnet, dass** mindestens drei übereinander liegende Laschensegmente (7-9, 20-23, 38-40) eine Querstoßlasche (1, 19, 37) bilden.

8. Verfahren zum Verbinden von Rumpfsektionen (5, 26, 27, 43), insbesondere von im Wickelverfahren hergestellten CFK-Rumpfsektionen, zur Schaffung einer Rumpfzelle für ein Flugzeug, mit mindestens einer Querstoßlasche (1, 19, 37) nach einem der Patentansprüche 1 bis 7, umfassend die folgenden Schritte:
■ Verbinden, insbesondere Vernieten, der mindestens einen Querstoßlasche (1, 19, 37) mit einem Ende (6, 24, 25, 41) einer Rumpfsektion (5, 26, 27, 43),
■ Aufschieben eines Endes (6, 24, 25, 41) einer anzufügenden Rumpfsektion (5, 26, 27, 43) auf die mindestens eine Querstoßlasche (1, 19, 37), um den Toleranzausgleich zwischen den Rumpfsektionen (5, 26, 27, 43) in radialer Richtung zu bewirken, und
■ Verbinden, insbesondere Vernieten, der mindestens einen Querstoßlasche (1, 19, 37) mit der angefügten Rumpfsektion (5, 26, 27, 43).

9. Verfahren nach Patentanspruch 8, **dadurch gekennzeichnet, dass** beide Enden (6, 24, 25, 41) der Rumpfsektionen (5, 26, 27, 43) angefast werden, um den Toleranzausgleich zu erleichtern.

10. Verfahren nach Patentanspruch 8 oder 9, **dadurch gekennzeichnet, dass** bei größeren Maßabweichungen zusätzliche Mittel zum Toleranzausgleich zwischen den zusammen zu fügenden Rumpfsektionen (5, 26, 27, 43), insbesondere streifenförmige Zulagen und/oder aushärtbare Kunststoffmaterialien, vorgesehen werden.

11. Verfahren nach einem der Patentansprüche 8 bis 10, **dadurch gekennzeichnet, dass** mindestens drei Querstoßlaschen (1, 19, 37) zum Verbinden von zwei Rumpfsektionen (5, 26, 27, 43) verwendet werden.

## Claims

1. A transverse butt strap (1, 19, 37) for creating a fuselage cell of an aircraft by joining together several fuselage sections (5, 26, 27, 43), which are fabricated in particular in a winding process as carbon fiber plastic sections, with the formation of a respective cross seam (14, 28, 48), **characterized in that** the transverse butt strap (1, 19, 37) exhibits at least two strap segments (7-9, 20-23, 38-40) lying radially one over the other, and that each of the strap segments (7-9, 20-23, 38-40) comprises a multitude of longitudinal slits (10, 11, 44, 45) are introduced into, in particular for radially adjusting the tolerance between the fuselage sections (5, 26, 27, 43), and the longitudinal slits (10, 11, 44, 45) are each arranged in the strap segments (7-9, 20-23, 38-40) tangentially offset relative to each other.

2. The transverse butt strap (1, 19, 37) according to claim 1, **characterized in that** a material thickness of the at least two strap segments (7-9, 20-23, 38-40) is preferably greater than a material thickness of each of the skins (4, 30, 31, 42) of the fuselage sections (5, 26, 27, 43).

3. The transverse butt strap (1, 19, 37) according to claim 1 or 2, **characterized in that** the longitudinal slits (10, 11, 44, 45) are preferably spaced uniformly apart from each other, forming a plurality of partial straps (17, 18, 50, 51).

4. The transverse butt strap (1, 19, 37) according to one of claims 1 to 3, **characterized in that** the strap segments (7-9, 20-23, 38-40) are formed with the same material as the skins (4, 30, 31, 42) of the fuselage sections (5, 26, 27, 43) to be joined together, in particular with a composite material or an aluminum alloy material.

5. The transverse butt strap (1, 19, 37) according to one of claims 1 to 4, **characterized in that** the transverse butt strap (1, 19, 37) is respectively connected by means of a plurality of connecting elements, in particular riveting elements (2, 29), with ends (6, 24, 25, 41) of the fuselage sections (5, 26, 27, 43) to be joined.

6. The transverse butt strap (1, 19, 37) according to one of claims 1 to 5, **characterized in that** the longitudinal slits (10, 11, 44, 45) each exhibit a recess (15, 16, 46, 47), in particular a circular recess.

7. The transverse butt strap (1, 19, 37) according to one of claims 1 to 6, **characterized in that** at least three strap segments (7-9, 20-23, 38-40) lying one over the other form a transverse butt strap (1, 19, 37).

8. A method for joining fuselage sections (5, 26, 27, 43), in particular CRP fuselage sections fabricated in a winding process, for creating a fuselage cell for an aircraft, with at least one transverse butt strap (1, 19, 37) according to one of claims 1 to 7, encompassing the following steps:
■ Connecting, in particular riveting, the at least one transverse butt strap (1, 19, 37) with one end (6, 24, 25, 41) of a fuselage section (5, 26, 27, 43),
■ Slipping an end (6, 24, 25, 41) of a fuselage section (5, 26, 27, 43) to be joined onto the at least one transverse butt strap (1, 19, 37), so as to offset the tolerance between the fuselage sections (5, 26, 27, 43) in a radial direction, and
■ Connecting, in particular riveting, the at least one transverse butt strap (1, 19, 37) with the joined fuselage section (5, 26, 27, 43).

9. The method according to claim 8, **characterized in that** both ends (6, 24, 25, 41) of the fuselage sections (5, 26, 27, 43) are chamfered to facilitate the process of offsetting the tolerance.

10. The method according to claim 8 or 9, **characterized in that**, given higher dimensional deviations, additional means are provided to offset the tolerance between the fuselage sections (5, 26, 27, 43) to be joined together, in particular strip-type junctions and/or curable plastic materials.

11. The method according to one of claims 8 to 10, **characterized in that** at least three transverse butt straps (1, 19, 37) are used to connect two fuselage sections (5, 26, 27, 43).

## Revendications

1. Couvre-joint transversal (1, 19, 37) pour créer une cellule de fuselage d'un aéronef par la liaison de plusieurs sections de fuselage (5, 26, 27, 43) qui sont particulièrement fabriquées en tant que sections CFK dans un procédé par enroulement, par formation respectivement d'un joint transversal (14, 28, 48), **caractérisé en ce que** le couvre-joint transversal (1, 19, 37) présente au moins deux segments de couvre-joint (7-9, 20-23, 38-40) reposant radialement l'un sur l'autre, et une pluralité de fentes longitudinales (10, 11, 44, 45) est intégrée dans chacun des segments de couvre-joint (7-9, 20-23, 38-40), en particulier pour l'équilibrage de tolérances radial entre les sections de fuselage (5, 26, 27, 43), et les fentes longitudinales (10, 11, 44, 45) sont agencées en étant respectivement décalées de manière tangentielle l'une à l'autre dans les segments de couvre-joint (7-9, 20-23, 38-40).

2. Couvre-joint transversal (1, 19, 37) selon la revendication 1, **caractérisé en ce qu'**une épaisseur de matériau des aux moins deux segments de couvre-joint (7-9, 20-23, 38-40) est de préférence supérieure à une épaisseur de matériau de chacune des enveloppes (4, 30, 31, 42) des sections de fuselage (5, 26, 27, 43).

3. Couvre-joint transversal (1, 19, 37) selon la revendication 1 ou 2, **caractérisé en ce que** les fentes longitudinales (10, 11, 44, 45) sont de préférence espacées régulièrement les unes des autres par la formation d'une pluralité de couvre-joints partiels (17, 18, 50, 51).

4. Couvre-joint transversal (1, 19, 37) selon l'une des revendications 1 à 3, **caractérisé en ce que** les segments de couvre-joint (7-9, 20-23, 38-40) sont formés avec le même matériau que les enveloppes (4, 30, 31, 42) des sections de fuselage (5, 26, 27, 43) à joindre ensemble, en particulier avec un matériau composite ou un matériau d'alliage d'aluminium.

5. Couvre-joint transversal (1, 19, 37) selon l'une des revendications 1 à 4, **caractérisé en ce que** le couvre-joint transversal (1, 19, 37) est relié via une pluralité d'éléments de liaison, en particulier des éléments de rivets (2, 29), à des extrémités (6, 24, 25, 41) des sections de fuselage (5, 26, 27, 43) à joindre.

6. Couvre-joint transversal (1, 19, 37) selon l'une des revendications 1 à 5, **caractérisé en ce que** les fentes longitudinales (10, 11, 44, 45) présentent respectivement un évidement (15, 16, 46, 47), en particulier un évidement circulaire.

7. Couvre-joint transversal (1, 19, 37) selon l'une des revendications 1 à 6, **caractérisé en ce qu'**au moins trois segments de couvre-joint (7-9, 20-23, 38-40) reposant l'un sur l'autre forment un couvre-joint transversal (1, 19, 37).

8. Procédé pour relier des sections de fuselage (5, 26, 27, 43), en particulier des sections CFK fabriquées dans un procédé par enroulement, pour créer une cellule de fuselage d'un aéronef comprenant au moins un couvre-joint transversal (1, 19, 37) selon l'une des revendications 1 à 7, comprenant les étapes suivantes :
■ liaison, en particulier rivetage, de l'au moins un couvre-joint transversal (1, 19, 37) à une extrémité (6, 24, 25, 41) d'une section de fuselage (5, 26, 27, 43),
■ poussée d'une extrémité (6, 24, 25, 41) d'une section de fuselage (5, 26, 27, 43) à joindre, sur l'au moins un couvre-joint transversal (1, 19, 37) pour effectuer, dans le sens radial, l'équilibrage de tolérances entre les sections de fuselage (5, 26, 27, 43), et
■ liaison, en particulier rivetage, de l'au moins un couvre-joint transversal (1, 19, 37) à la section de fuselage (5, 26, 27, 43) jointe.

9. Procédé selon la revendication 9, **caractérisé en ce que** les deux extrémités (6, 24, 25, 41) des sections de fuselage (5, 26, 27, 43) sont chanfreinées afin de faciliter l'équilibrage de tolérances.

10. Procédé selon la revendication 8 ou 9, **caractérisé en ce qu'**en cas d'écarts de dimensions importants, des moyens supplémentaires pour l'équilibrage de tolérances entre les sections de fuselage (5, 26, 27, 43) à joindre ensemble sont prévus, en particulier des compléments en forme de bande et/ou des matériaux plastiques durcissables.

11. Procédé selon l'une des revendications 8 à 10, **caractérisé en ce qu'**au moins trois couvre-joints transversaux (1, 19, 37) sont employés pour relier deux sections de fuselage (5, 26, 27, 43).
